# EUROPEAN PATENT APPLICATION

(11) **EP 1 429 538 A2**
(43) Date of publication of application: **16.06.2004**
(21) Application number: 03028227.1
(22) Date of filing: 09.12.2003
(51) Int. Cl.: H04N 1/62

(54) **Image correction device and image correction program storage medium**

(30) Priority: 11.12.2002 JP 2002359675; 14.11.2003 JP 2003385086
(71) Applicant: FUJI PHOTO FILM CO., LTD., Kanagawa-ken, 250-0193 (JP)
(72) Inventor: Kaku, Toshihiko, Ashigarakami-gun Kanagawa 258-8538 (JP); Enomoto, Jun, Ashigarakami-gun Kanagawa 258-8538 (JP)
(74) Representative: Klunker . Schmitt-Nilson . Hirsch

(57) **Abstract**

The present invention relates to an image correction device and the like which perform image correction on image data of an image to correct defects such as flaws, red-eye, closed eyes, or underexposure caused by backlight in local objects in the image and has an object to provide an image correction device and the like which require less storage space for image data.

When correcting defects in local objects in an image, the objects are detected, and then detection information about the detected objects and the image before the corrections are stored being associated with each other. Alternatively, correction information about the corrected objects and the image in which the objects have been corrected are stored being associated with each other. Alternatively, correction information about the corrected objects and the image in which the objects are yet to be corrected are stored being associated with each other.

## Description

### BACKGROUND OF THE INVENTION

### Field of the Invention

The present invention relates to an image correction device which performs image correction on image data of an image to correct defects such as flaws, red-eye, closed eyes, or underexposure caused by backlight, in local objects such as human figures, facial parts, and specific subjects in the image as well as to an image correction program storage medium storing an image correction program that makes a computer operate as the image correction device.

### Description of the Related Art

There are cameras equipped with a flash unit which has a light-emitting section to emit flash lights, as is conventionally known in the art. Human and animal eyes are structured to dilate the pupils in dark places to admit more light. Consequently, if a person or animal with the pupils dilated in a dark place is photographed with a camera and its flash unit, a flash light emitted by the light-emitting section of the flash unit and entering the eyes through the dilated pupils may produce a so-called red-eye phenomenon in which the flash light reflected by the capillaries of the retina covering the inner surfaces of the eyeballs causes the pupils of the person or animal to look red. Also, depending on the angle of incidence at which a flash light emitted by the flash unit enters the eyeballs, flash photography may produce a so-called gold-eye phenomenon in which the flash light reflected by the cornea or the sclera surrounding the outermost layer of the eyeballs causes the pupils of the person or animal to look whitish.

With the recent development of digital processing technologies, an image processing unit has been proposed which acquires image data of a photograph in which pupils of a person or animal look red or whitish as described above, detects red-eye or gold-eye in the image corresponding to the acquired image data, and corrects the detected red-eye or gold-eye (see, for example, Patent Document 1).

### [Patent Document]

### Japanese Patent Laid-Open No. 10-233929

The image processing unit proposed in Patent Document 1 described above performs image correction to correct red-eye in an image and stores the corrected image instead of the original image. Consequently, even if errors are made in red-eye detection or an inappropriate image correction is made, it is no longer possible to detect red-eye or make corrections anew using the original image. Besides, even if the image processing unit proposed in Patent Document 1 uses the best image correction and detection techniques at the time when an image is corrected, a more suitable image correction or detection technique will be devised as a result of technological advancement. However, the corrected image can no longer benefit from the more suitable image correction technique or the like.

To solve the above problems, it is conceivable to store corrected image data together with the original image data. However, this may raise a new problem of being difficult to keep track of correspondence between the original and corrected image data. Besides, storing both original and corrected image data increases storage requirements.

The above problems exist not only in the field of cameras and photography, but also in the field of image processing in general which handles any image such as an image captured from the WEB. Also, the above problems can arise not only in relation to the red-eye and gold-eye described above, but also in relation to correction of local defects in images.

In view of the above circumstances, the object of the present invention is to provide an image correction device which requires less storage space for image data and an image correction program storage medium storing an image correction program that makes a computer operate as the image correction device.

### SUMMARY OF THE INVENTION

The present invention has been made in view of the above circumstances and provides an image correction device and an image correction program storage medium.

A first aspect of the image correction devices according to the present invention which achieve the above object is an image correction device which makes image corrections to image data of an image to correct defects in local objects in the image, the image correction device having:
an image acquisition section which acquires image data of an image;
a detection section which detects objects to be subj ected to the image corrections in the image corresponding to the image data acquired by the image acquisition section and generates detection information which describes details of the detected objects; and
a storage section which stores the image data acquired by the image acquisition section and the detection information generated by the detection section by associating the acquired image data with the detection information.

When correcting defects in local objects in an image, the first image correction device of the present invention detects the objects and stores detection information about the detected objects and the original image yet to be corrected by associating them with each other. Consequently, if a wrong or inappropriate image correction is made or a more suitable image correction technique is devised as a result of technological advancement as described in "Description of the Related Art," defects in the objects identified in the stored original image based on the stored detection information can be corrected anew. Also, according to the first image correction device, the detection information stored being associated with the original image data may include, for example, the coordinates, sizes, shapes, RGB values, brightness, saturation, and hues of the detected objects as well as image data which indicates the places from which the objects have been cut out. Since the detection information has a smaller data volume than the corrected image data, it does not require much storage space.

In the first image correction device, preferably the storage section associates the image data and the detection information with each other by associating the objects detected by the detection section in the image corresponding to the image data with the detection information about the objects.

The first image correction device equipped with this storage section can, for example, embed detection information in an object as tag information, making it easy to determine in what part of the image the object associated with the detection information is located.

Further, in the first image correction device, the storage section preferably stores the image data and the detection information by embedding the detection information in the image data as an electronic watermark.

If detection information is stored being embedded in an object as tag information, for example, tag information may be deleted at the time of re-storing an image, depending on the type of the application used for editing images. If detection information is embedded in image data as an electronic watermark, it prevents a risk of deleting detection information at the time of re-storing an image. In addition, an image looks quite natural even after detection information is stored in the image.

A second of the image correction devices according to the present invention which achieve the above object is an image correction device which makes image corrections to image data of an image to correct defects in local objects in the image, the image correction device having:
an image acquisition section which acquires image data of an image;
an image correction processor section which makes the image corrections to the objects in the image corresponding to the image data acquired by the image acquisition section and generates correction information which describes details of the image corrections made to the objects, at least to the extent that the objects before the corrections can be reproduced; and
a storage section which stores at least either the image data acquired by the image acquisition section or the image data subjected to the image corrections by the image correction processor section and the correction information generated by the image correction processor section by associating the acquired image data or the corrected image data with the correction information.

Since the second image correction device of the present invention makes image corrections to image data of an image to correct defects in local objects in the image and stores the correction information about the corrected objects and the image in which the objects have been corrected by associating them with each other, it can return the corrected image data to the original image data based on the correction information such as changes in the sizes and shapes of the corrected objects, variations in their RGB values, brightness, saturation, and hues, and image data which indicates the places from which the objects were cut out before the image correction. Therefore, if a wrong or inappropriate image correction is made or a more suitable image correction technique is devised as a result of technological advancement as described in "Description of the Related Art," the suitable image correction technique and the like can be applied to the original image data.

Since the second image correction device stores the correction information about the corrected objects and the original image in which the objects have not yet been corrected by associating them with each other, if a wrong or inappropriate image correction is made or a more suitable image correction technique is devised as a result of technological advancement as described in "Description of the Related Art," the suitable image correction technique and the like can be applied to the original image data.

Furthermore, the correction information stored by the second image correction device has a smaller data volume than the image data before the image corrections, and thus it does not require much storage space, as is the case with the detection information.

In the second image correction device, preferably the storage section associates the image data and the correction information with each other by associating the objects corrected by the image correction processor section in the image corresponding to the image data with the correction information about the objects.

The second image correction device equipped with this storage section can, for example, embed correction information in an object as tag information, making it easy to determine in what part of the image the object associated with the correction information is located.

Further, in the second image correction device, the storage section preferably stores the image data and the detection information by embedding the detection information in the image data as an electronic watermark.

For example, if detection information is stored being embedded in an object as tag information, tag information may be deleted at re-storing an image depending on the type of an application used for editing images. If detection information is embedded in image data as an electronic watermark, it prevents a risk of deleting detection information at the time of re-storing an image. In addition, an image looks quite natural even after detection information is stored in the image.

As an aspect common to the first image correction device and the second image correction device, preferably the image corrections are applied to defects in facial parts composing a face in the image.

Correction of facial parts including correction of the red-eye and gold-eye described in "Description of the Related Art" is a delicate matter, and it is difficult to make corrections in a manner acceptable to everyone. However, there is a high demand to correct defects in facial parts so as to eliminate any sense of strangeness, and more suitable image correction and detection techniques are expected to be devised with advances in technology.

Also, a first aspect of the image correction program storage media according to the present invention which achieve the above object is an image correction program storage medium storing a first image correction program that runs on a computer and makes the computer operate as the first image correction device which makes image corrections to image data of an image to correct defects in local objects in the image, the first image correction program having:
an image acquisition section which acquires image data of an image;
a detection section which detects objects to be subjected to the image corrections in the image corresponding to the image data acquired by the image acquisition section and generates detection information which describes details of the detected objects; and
a storage section which stores the image data acquired by the image acquisition section and the detection information generated by the detection section by associating the acquired image data with the detection information.

The first image correction program stored in the first image correction program storage medium of the present invention, when installed and run on a computer, makes the computer operate as the first image correction device of the present invention. It includes all the aspects of the first image correction device of the present invention.

Incidentally, components of the first image correction device and first image correction program have the same names. They indicate both hardware and software in the case of the first image correction device, and only software in the case of the first image correction program.

Also, a second of the image correction program storage media according to the present invention which achieve the above object is an image correction program storage medium storing a second image correction program that runs on a computer and makes the computer operate as the second image correction device which makes image corrections to image data of an image to correct defects in local objects in the image, the second image correction program having:
an image acquisition section which acquires image data of an image;
an image correction processor section which makes the image corrections to the objects in the image corresponding to the image data acquired by the image acquisition section and generates correction information which describes details of the image corrections made to the objects, at least to the extent that the objects before the corrections can be reproduced; and
a storage section which stores at least either the image data acquired by the image acquisition section or the image data subjected to the image corrections by the image correction processor section and the detection information generated by the detection section by associating the acquired image data or the corrected image data with the correction information.

The second image correction program stored in the second image correction program storage medium of the present invention, when installed and run on a computer, makes the computer operate as the second image correction device of the present invention. It includes all the aspects of the second image correction device of the present invention.

Incidentally, components of the second image correction device and second image correction program have the same names. They indicate both hardware and software in the case of the second image correction device, and only software in the case of the second image correction program.

As described above, the present invention provides an image correction device which can correct defects in the image again and requires less storage space for image data and an image correction program storage medium storing an image correction program that makes a computer operate as the image correction device.

### BRIEF DESCRIPTION OF THE DRAWINGS

Preferred embodiments of the present invention will be described in detail based on the following figures, wherein:
Fig. 1 is a perspective view showing outward appearance of an exemplary digital printer;
Fig. 2 is a schematic diagram showing a configuration of a scanner attached to an image input device;
Fig. 3 is a block diagram showing a configuration of the main unit of an image correction device attached to the image input device;
Fig. 4 is a schematic diagram showing an internal configuration of the image output device;
Fig. 5 is a diagram showing an embodiment of an image correction program storage medium according to the present invention;
Fig. 6 is a functional block diagram showing an embodiment of the image correction device according to the present invention;
Fig. 7 is a flowchart showing an embodiment of processes performed by the image correction device of the present invention; and
Fig. 8 is a schematic diagram showing uses of image data stored in first to third storage formats shown in Fig. 7.

### DETAILED DESCRIPTION OF THE PREFERRED EMBODIMENTS

Embodiments of the present invention will be described below.

Here, description will be given of a digital printer which incorporates a first embodiment of the image correction device according to the present invention.

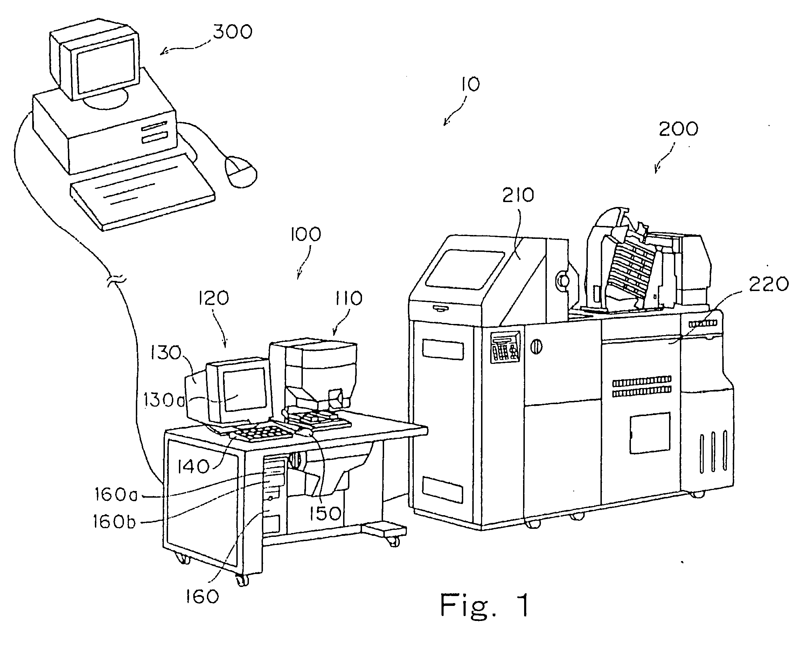

Fig. 1 is a perspective view showing outward appearance of an exemplary digital printer. First, positioning of the present invention will be described with reference to Fig. 1.

The digital printer 10 has an image input device 100 and image output device 200. In this example, the image input device 100 is connected with an external personal computer 300.

The image input device 100 has a scanner 110 which photoelectrically reads image frames one after another from a developed photographic film and an image correction device 120 which detects facial parts composing each face in the images using image data of the read images and makes image corrections to the detected facial parts. The image correction device 120 is an example of the image correction devices according to the present invention. In its external configuration, the image correction device 120 has a main unit 160, an image display unit 130 which presents images and character strings on a display screen 130a according to instructions from the main unit 160, a keyboard 140 used to enter various information in the main unit 160 by means of keying, and a mouse 150 used to enter an instruction by pointing, for example, to an icon or the like located at a desired position on the display screen 130a. Also, as viewed from the outside, the main unit 160 is equipped with an FD port 160a in which a flexible disk (FD) is mounted and a CD-ROM port 160b in which a CD-ROM is mounted. Viewed broadly, the main unit 160 is composed of the image display unit 130, a computer circuit section which compose a computer system together with the keyboard 140 and mouse 150, and an image processing board which is a piece of hardware dedicated to image correction. Details of the computer circuit section and image processing board will be described later.

The image output device 200 has a laser printer section 210 which exposes photographic paper through scanning with laser light modulated based on images acquired by the image input device 100 and a processor section 220 which obtains photo prints by developing the images on the photographic paper exposed by the laser printer section 210. Internal configuration of the image output device 200 will also be described later.

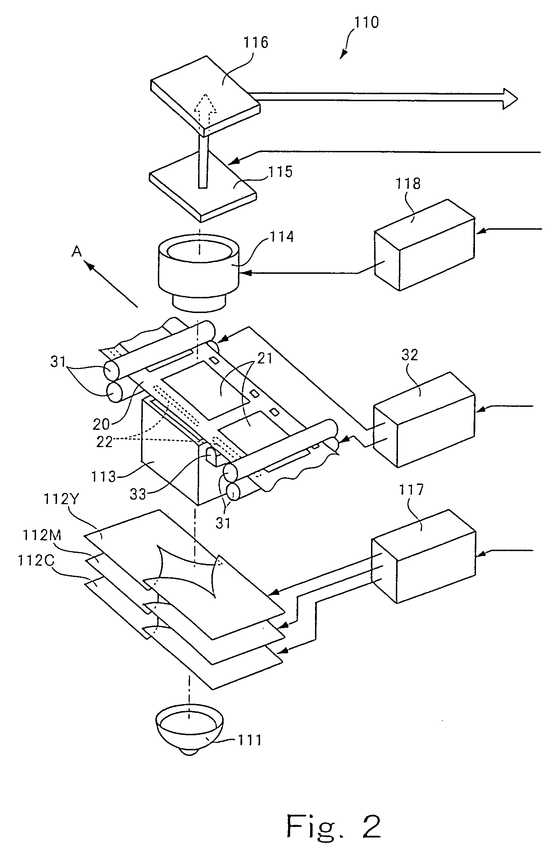

Fig. 2 is a schematic diagram showing a configuration of the scanner attached to the image input device.

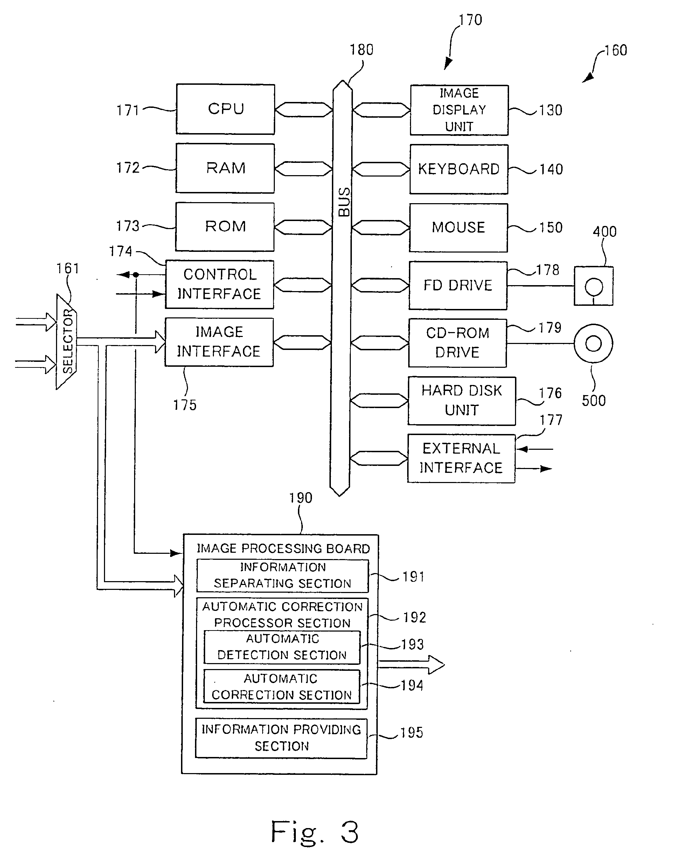

In this example, a developed photographic film 20 is set in a film carrier (no outside view of the film carrier is shown) equipped with feed rollers 31 and a feed drive section 32 and is fed in the direction of arrow A in order to be scanned as the feed rollers 31 are driven by the feed drive section 32. The photographic film 20 shown here is compliant with an APS system and has an information recording section 22 in which information about individual image frames 21 is recorded magnetically when the image frames 21 are shot. Shooting information recorded in the information recording section 22 is picked up by a magnetic head 33 and sent to the computer circuit section 170 (see Fig. 3) described later.

The scanner 110 is equipped with a light source 111 constituted of a halogen lamp or metal halide lamp. Light emitted from the light source 111 passes through three filters 112C, 112M, and 112Y which pass C (cyan) , M (magenta), and Y (yellow), respectively, passes through a diffusion box 113, and illuminates the photographic film 20 from the bottom of the figure. After passing through the photographic film 20, the light passes through a zoom lens 114 and reaches a CCD light sensor 115. The image recorded on the photographic film 20 is focused on a plane which contains a sensor surface of the CCD light sensor 115 by the zoom lens 114. Image signals obtained by the CCD light sensor 115 is converted into digital image data by an A/D converter 116 and sent to the main unit 160 (see Fig. 3) described later.

Each of the three filters 112C, 112M, and 112Y has an aperture at its center to allow light to pass through the filter without being affected by the filter while the light passing around the aperture is affected by the filter. A filter control section 117 sets the aperture opening of each filter to a predetermined size, thereby regulating the effect of the filter. After passing through the three filters 112C, 112M, and 112Y, the light is diffused in the diffusion box 113 and then illuminates the photographic film 20 as a uniform light.

The image on the photographic film 20 is focused on the surface of the CCD light sensor 115 by the zoom lens 114. The zoom lens 114 has its focal distance adjusted by being driven by a zoom lens drive section 118 and forms an image on the sensor surface of the CCD light sensor 115 at a magnification corresponding to its focal distance. The CCD light sensor 115 is constituted of line sensors which have a large number of light receiving elements arrayed along the width of the photographic film 20. The line sensors are lined up in three rows in the feed direction of the photographic film 20. R (red), G (green), and B (blue) color separation filters are placed on surfaces of the respective rows of line sensors, which read the R, G, and B components of the image frame on the photographic film 20, respectively. The three rows of line sensors repeat the image reading operation while the photographic film 20 is fed in the direction of A, and thereby read the image frames which stretch two-dimensionally on the photographic film 20.

Fig. 3 is a block diagram showing a configuration of the main unit of the image correction device attached to the image input device.

The main unit 160 is composed mainly of the computer circuit section 170 and image processing board 190.

The computer circuit section 170 includes a CPU 171 which runs various programs; a RAM 172 used as a work area for the CPU 171 to run the various programs; a ROM 173 which stores fixed constants and the like; a control interface 174 used to input and output control signals which control various parts of the image input device 100; an image interface 175 used to input and output image data of images; a hard disk unit 176 which stores various programs, data, and the like; an external interface 177 used to send and receive data between devices other than the image input device 100, such as between the image output device 200 and personal computer 300 in the example of Fig. 1; an FD drive 178 which accesses an FD 400 mounted on it; and a CD-ROM drive 179 which accesses a CD-ROM 500 mounted on it. The above elements are connected via a bus 180 with each other as well as with the image display unit 130, keyboard 140, and mouse 150 whose outward appearance is shown in Fig. 1.

The CD-ROM 500 stores an image correction program needed to make the image correction device 120 operate as a site evaluation system. As the CD-ROM 500 is mounted on the CD-ROM drive 179, the image correction program is uploaded from the CD-ROM 500 to the image correction device 120 and stored on the hard disk unit 176.

Incidentally, although a CD-ROM has been cited as an example of the image correction program storage media according to the present invention, a hard disk unit to which the image correction program has been uploaded as described above can also be an example of the storage media. If the image correction program is downloaded to an FD or other storage medium, the FD or the like storing the downloaded image correction program can also be an example of the storage media. Furthermore, the image correction program storage media are not limited to those illustrated here, and may include a DVD, a compact disk, card-shaped or stick-shaped small media, etc. In such a case, the computer running the image correction program of the present invention is supposed to be equipped with an appropriate drive used to access the given image correction program storage medium.

In this example, various control signals are sent out to the feed drive section 32, the filter control section 117, and the zoom lens drive section 118 shown in Fig. 2 via the control interface 174. In response to the respective control signals, the feed drive section 32 feeds the photographic film 20, the filter control section 117 adjusts the filters 112C, 112M, and 112Y, and the zoom lens drive section 118 adjusts the focal distance (adjusts the image magnification) of the zoom lens 114. The control interface 174 also outputs control signals which control the CCD light sensor 115, control signals which switch a selector 161 shown in Fig. 3, and control signals which control various parts of the image input device 100. Also, the control interface 174 is used to input shooting information picked up by the magnetic head 33 shown in Fig. 2 as well as signals from various sensors (not shown) installed on the image input device.

The selector 161 is connected to both the scanner 110 (Fig. 2) of the image input device 100 and the external personal computer 300. Depending on the control signals it receives, the selector 161 sends the image data acquired by the scanner 110 or external image data (from the personal computer 300) to the image interface 175 and image processing board 190.

The image processing board 190 is equipped with an information separating section 191, automatic correction processor section 192 composed of an automatic detection section 193 and automatic correction section 194, and information providing section 195. These components of the image processing board 190 will be descried in detail later.

The image data acquired by the scanner 110 through scanning is input in the image processing board 190 via the selector 161 and subjected to image corrections described later. After the image corrections, the image data is sent to the image output device 200 (Fig. 1) and used as a signal for laser modulation during exposure to laser light. Also, the image data after the image corrections is input in the computer circuit section 170 via the image processing board 190 and image interface 175 and stored on the hard disk unit 176, a FD 400 mounted on the FD drive 178, and/or the like.

If image data is input from the external personal computer 300, the image data outputted from the personal computer 300 is input in the image processing board 190 via the selector 161 and subjected to the image corrections described later. The image data after the image corrections is sent to the image output device 200 (Fig. 1) as well as stored on the hard disk unit 176, a FD 400 mounted on the FD drive 178, and/or the like.

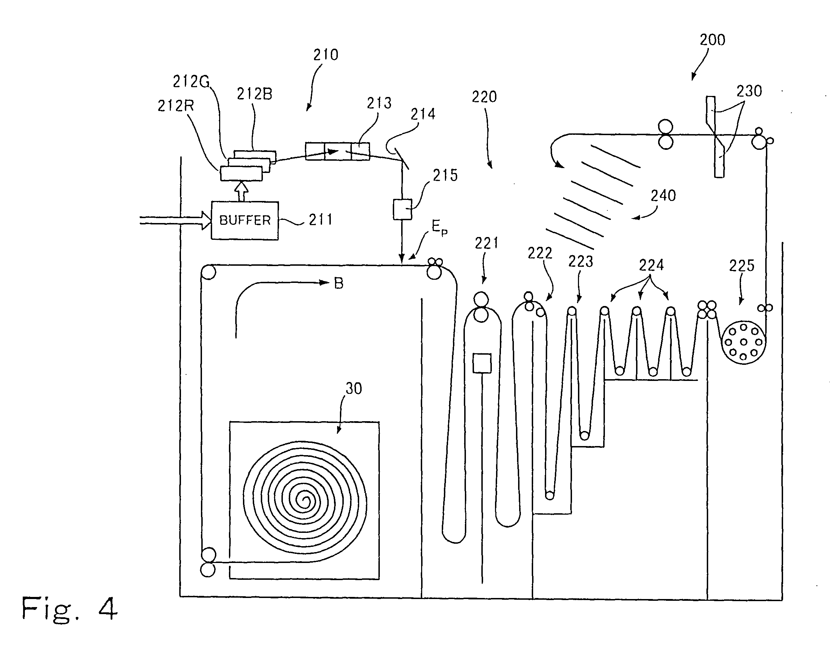

Fig. 4 is a schematic diagram showing an internal configuration of the image output device.

The image output device 200 contains a long roll of unexposed photographic paper 30. The photographic paper 30 has its leading edge pulled out and then, after passing through the laser printer section 210 and processor section 220, it is cut by a cutter 230 frame by frame and stacked on a sorter 240.

The image data sent to the image output device 200 from the computer circuit section 170 (Fig. 3) of the image input device 100 shown in Fig. 1 or from the image processing board 190 (Fig. 3) is stored temporarily in a buffer 211 of the laser printer section 210.

The laser printer section 210 is equipped with three laser sources 212R, 212G, and 212B which emit R, G, and B laser beams, respectively. The laser sources 212R, 212G, and 212B are operated based on R, G, and B color separated images, respectively, stored in the buffer 211 and emit laser beams which have been modulated accordingly. Then, the laser beams are reflected and deflected repeatedly by a rotating polygonal mirror 213, reflected by a mirror 214, pass through an fθ lens 215 to adjust spot diameter on the photographic paper 30, and scan the photographic paper 30 repeatedly in an exposing section Ep in the direction perpendicular to the paper in Fig. 4. In the meantime, the photographic paper 30 is transported in the direction of arrow B and exposed to the laser images.

The exposed photographic paper is transported to the processor section 220, where it has its transport speed adjusted by a reserver section 221 and then undergoes color development in a developer tank 222, bleach-fixing in a fixing bath 223, rinsing in a rinse tank 224, and drying in a dryer section 225. Then, it is cut by the cutter 230 frame by frame and stacked on the sorter 240 as described above.

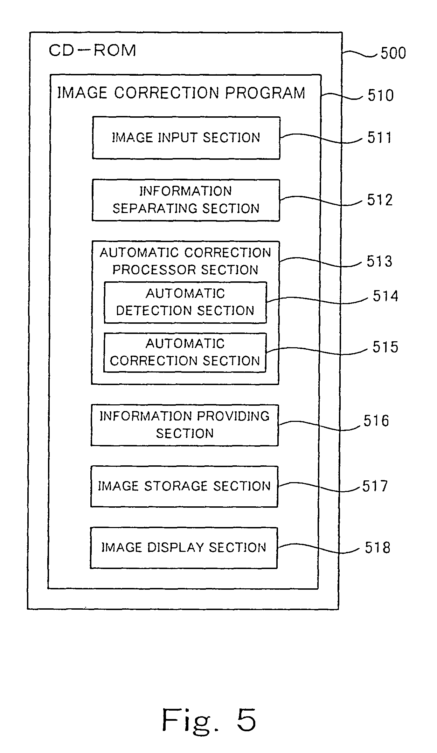

Fig. 5 is a diagram showing an embodiment of the image correction program storage medium according to the present invention.

An image correction program 510 shown in Fig. 5 is stored on the CD-ROM 500, the embodiment of the image correction program storage media according to the present invention.

The image correction program 510 is run on the image correction device 120 shown in Fig. 1 and makes it operate as an image correction device which makes image corrections to image data of an image to correct defects in facial parts composing a face in the image. The image correction program 510 includes an image input section 511, information separating section 512, automatic correction processor section 513 composed of an automatic detection section 514 and automatic correction section 515, information providing section 516, image storage section 517, and image display section 518.

Operation of these components of the image correction program 510 will be described later.

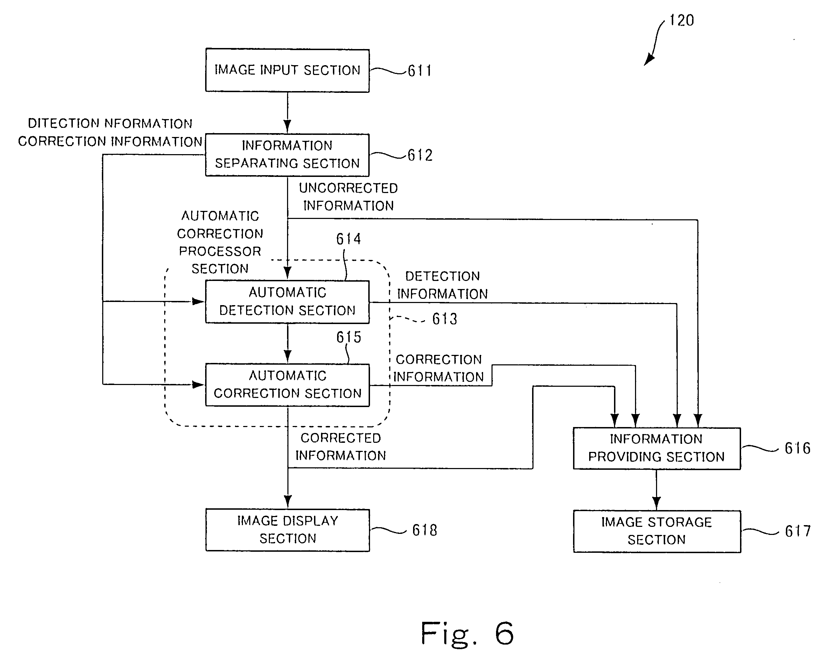

Fig. 6 is a functional block diagram showing an embodiment of the image correction device according to the present invention.

The image correction device 120 in Fig. 6 is implemented when the image correction program 510 in Fig. 5 is loaded and run on the image correction device 120 in Fig. 1.

The image correction device 120 in Fig. 6 corrects defects in facial parts composing each face in images. It is equipped with an image input section 611, information separating section 612, automatic correction processor section 613 composed of an automatic detection section 614 and automatic correction section 615, information providing section 616, image storage section 617, and image display section 618.

The image input section 611, information separating section 612, automatic correction processor section 613, information providing section 616, image storage section 617, and image display section 618 of the image correction device 120 correspond respectively to the image input section 511, information separating section 512, automatic correction processor section 513, information providing section 516, image storage section 517, and image display section 518 of the image correction program 510 in Fig. 5. Each of the hardware component is composed of a combination of the corresponding software component and other components--hardware of the image correction device 120 shown in Fig. 1, an OS (operating system), and application programs--needed to implement functions of the software component.

The components of the image correction device 120 in Fig. 6 will be described below together with the components of the image processing board 190 in Fig. 4 and the components of the image correction program 510 in Fig. 5.

Incidentally, the operation of the components of the image correction device 120 will be described here abstractly, and their concrete operation will be described later.

The image input section 611 of the image correction device 120 in Fig. 6 is a component which corresponds to the image input section 511 of the image correction program 510 in Fig. 5 in terms of application software. It acquires image data of images. According to the present embodiment, both image data captured into the image processing board 190 via the selector 161 of the image correction device 120 after the photographic film 20 is read by the scanner 110 and image data sent from the external personal computer 300 and captured into the image processing board 190 via the selector 161 are examples of the image data acquired by the image input section 611. The functional part which acquires the image data is an example of an image acquisition function according to the present invention.

The information separating section 612 corresponds to the information separating section 512 of the image correction program 510 in Fig. 5 in terms of application software. It corresponds to the information separating section 191 of the image processing board 190 in Fig. 3 in terms of hardware. If image data is stored in the hard disk unit 176 of the image correction device 120 with facial parts being associated with detection information or correction information (described later), the information separating section 612 separates the image data from the detection information or correction information when the image data is captured into the image processing board 190 by the image input section 611. If the image stored with facial parts being associated with correction information has been subjected to image corrections by the automatic correction section 615 (described later), the information separating section 612 separates the image data from the correction information when the image data is captured into the image processing board 190. The correction information allows the original facial parts to be restored from the corrected facial parts, and thereby allows the corrected image data to be returned to the original image data.

The automatic detection section 614 of the automatic correction processor section 613 corresponds to the automatic detection section 514 in the automatic correction processor section 513 of the image correction program 510 in Fig. 5 in terms of application software. It corresponds to the automatic detection section 193 in the automatic correction processor section 192 of the image processing board 190 in Fig. 3 in terms of hardware. The automatic detection section 614 detects the facial parts to be corrected from among the facial parts in the image corresponding to the image data acquired by the image input section 611 and generates detection information about details of the detected facial parts. The detection information includes, for example, the coordinates, sizes, shapes, RGB values, brightness, saturation, and hues of the detected facial parts as well as image data which indicates the places from which the facial parts have been cut out. The automatic detection section 614 is an example of functions of the detection section according to the present invention.

The automatic correction section 615 of the automatic correction processor section 613 corresponds to the automatic correction section 515 in the automatic correction processor section 513 of the image correction program 510 in Fig. 5 in terms of application software. It corresponds to the automatic correction section 194 in the automatic correction processor section 192 of the image processing board 190 in Fig. 3 in terms of hardware. The automatic correction section 615 makes image corrections to the facial parts detected by the automatic detection section 614 and generates correction information which describes details of the image corrections made to the facial parts. The correction information includes, for example, changes in the sizes and shapes of the corrected objects, variations in their RGB values, brightness, saturation, and hues, and image data which indicates the places from which the objects were cut out before the image correction. The correction information allows the automatic correction section 615 to restore the original facial parts from the corrected facial parts. The automatic correction section 615 is an example of functions of the correction section according to the present invention.

The information providing section 616 corresponds to the information providing section 516 of the image correction program 510 in Fig. 5 in terms of application software. It corresponds to the information providing section 195 of the image processing board 190 in Fig. 3 in terms of hardware. The information providing section 616 associates the facial parts detected by the automatic detection section 614 in the image corresponding to the image data acquired by the image input section 611 with the detection information about the facial parts. Also, the information providing section 616 can associate the facial parts to be corrected by the automatic correction section 615 in the image corresponding to the image data acquired by the image input section 611 or the image data corrected by the automatic correction section 615 with the correction information about the facial parts.

The image storage section 617 corresponds to the image storage section 517 of the image correction program 510 in Fig. 5 in terms of application software. It stores the image data acquired by the image input section 611 and the detection information generated by the automatic detection section 614 after they have been associated with each other by the information providing section 616. Also, the image storage section 617 can store the image data acquired by the image input section 611 or the image data corrected by the automatic correction section 615 and the correction information generated by the automatic correction section 615 after they have been associated with each other by the information providing section 616. Functions of the image storage section 617 are served mainly by the hard disk unit 176 (Fig. 3) of the image correction device 120 shown in Fig. 1. Besides, the combination of the image storage section 617 and the information providing section 616 described above is an example of functions of the storage section according to the present invention.

Furthermore, the image display section 618 corresponds to the image display section 518 of the image correction program 510 in Fig. 5 in terms of application software. It displays images. In terms of hardware, functions of the image display section 618 are served by the combination of the CPU 171 incorporated in the main unit 160 of image correction device 120 in Fig. 1 (Fig. 3) and the image display unit 130 of the image correction device 120.

The embodiments of the present invention will be described more concretely below. Description will be given of an example of how image corrections are made to image data of a red-eye image, i.e., an image in which the pupils of a person turn red as a result of flash photography in a dark place.

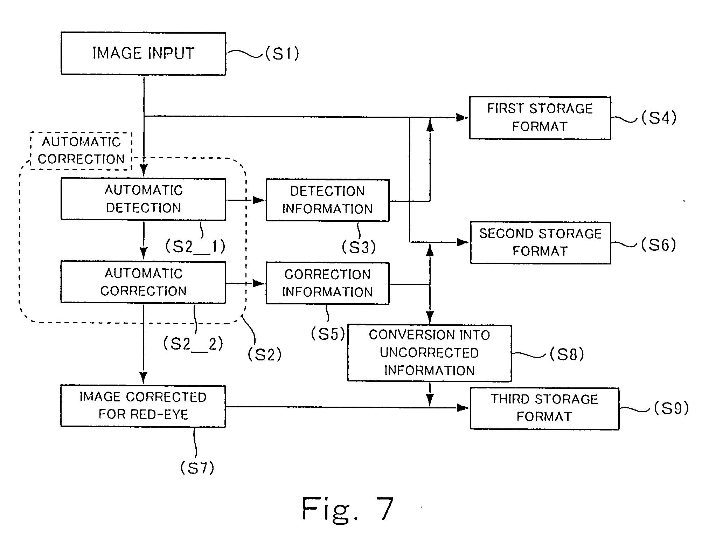

Fig. 7 is a flowchart showing an embodiment of processes performed by the image correction device of the present invention.

First, a photographic film 20 which contains red eyes with the pupils of a person looking red is read by the scanner 110 through scanning and the image input section 611 captures the image data of the photographic film 20 into the image processing board 190 via the selector 161 of the image correction device 120 (Step S1).

Next, the red eyes with the person's pupils looking red is detected in the image corresponding to the image data acquired in Step S1 and detection information is generated, where the detection information includes the coordinates, sizes, shapes, RGB values, brightness, saturation, and hues of the detected red eyes as well as image data which indicates the places from which the red eyes have been cut out (Step S2_1).

Then, the detection information generated in Step S2_1 is embedded by the information providing section 616 as tag information in the red eyes in the image corresponding to the image data acquired in Step S1 (Step S3). The image data with the detection information embedded in the red eyes is stored by the image storage section 617 (hereinafter, this storage format will be referred to as the first storage format) (Step S4).

Image corrections are made to the red eyes detected in Step S2_1 and correction information which describes details of the image corrections made to the red eyes is generated, where the correction information includes the shapes of the red eyes, variations in their RGB values, brightness, saturation, and hues, and image data which indicates the places from which the red eyes were cut out before the image correction (Step S2_2).

Then, the correction information generated in Step S2_2 is embedded by the information providing section 616 as tag information in the red eyes in the image corresponding to the image data acquired in Step S1 (Step S5). The image data with the correction information embedded in the red eyes is stored by the image storage section 617 (hereinafter, this storage format will be referred to as the second storage format) (Step S6).

Also, the correction information generated in Step S2_2 is converted into its inverse, i.e., correction information (hereinafter, this information will be referred to as the correction information for red-eye restoration) which describes processes needed to restore the original red eyes from the corrected red eyes and the correction information for red-eye restoration is embedded (Step S8) by the information providing section 616 as tag information in the corrected eyes in the image (Step S7) corrected for red-eye in Step S2_2. The image data with the correction information for red-eye restoration being embedded in the eyes is stored by the image storage section 617 (hereinafter, this storage format will be referred to as the third storage format) (Step S9).

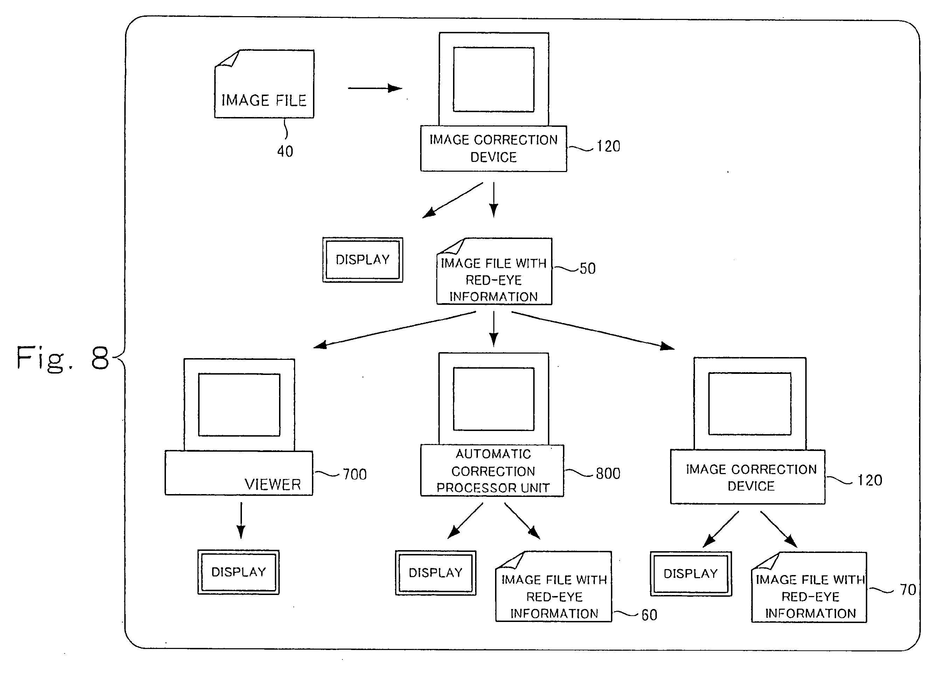

Fig. 8 is a schematic diagram showing uses of image data stored in the first to third storage formats shown in Fig. 7.

The image data of a red-eye image 40 is captured into the image correction device 120, undergoes the automatic detection process (Step S2_1) shown in Fig. 7 and automatic correction process (Step S2_2), and stored in the first to third storage formats.

A viewer 700 shown in Fig. 8 is similar to the image correction device 120 except that it is not equipped with the automatic correction processor section 613. It has capabilities to display images based on image data. Upon receiving an image file with red-eye information 50 stored in any of the first to third storage formats, the viewer 700 displays the image corresponding to the image data stored in the given storage format.

An automatic correction processor unit 800 is the image correction device 120 from which the functions of the automatic detection section 614 has been omitted. When the automatic correction processor unit 800 receives an image file with red-eye information 50 containing image data in the first storage format, it can identify the locations and the like of the red eyes based on the detection information embedded in the image data and thus, make image corrections to the identified red eyes anew. When the automatic correction processor unit 800 receives an image file with red-eye information 50 containing image data in the second storage format, it can identify the locations and the like of the red eyes based on the correction information embedded in the image data and thus, make image corrections to the identified red eyes anew. When the automatic correction processor unit 800 receives an image file with red-eye information 50 containing image data in the third storage format, it can restore the original red eyes from the corrected red eyes based on the correction information for red-eye restoration embedded in the image data, return the corrected image data to the original image data, identify the locations and the like of the red eyes, and thus, make image corrections to the identified red eyes anew.

When the image correction device 120 receives an image file with red-eye information 50 containing image data in the first storage format, it can detect red eyes again in the image corresponding to the image data, identify the locations and the like of the red eyes based on the detection information embedded in the image data, and make image corrections to the identified red eyes anew. When the image correction device 120 receives an image file with red-eye information 50 containing image data in the second storage format, it can detect red eyes again in the image corresponding to the image data, identify the locations and the like of the red eyes based on the correction information embedded in the image data, and make image corrections to the identified red eyes anew. When the image correction device 120 receives an image file with red-eye information 50 containing image data in the third storage format, it can restore the original red eyes from the corrected red eyes based on the correction information for red-eye restoration embedded in the image data, return the corrected image data to the original image data, detect red eyes again in the image corresponding to the image data, identify the locations and the like of the red eyes based on the correction information for red-eye restoration embedded in the image data, and make image corrections to the identified red eyes anew.

When correcting defects in facial parts composing a face in an image, the embodiments described above detect the facial parts and store detection information about the detected facial parts and the image containing the facial parts yet to be corrected, by associating them with each other, or make image corrections to the detected facial parts and store correction information about the corrected objects and the image containing the corrected objects, by associating them with each other. Thus, if a wrong or inappropriate image correction is made or a more suitable image correction technique is devised as a result of technological advancement, by sending the image data stored being associated with the detection information or correction information to the automatic correction processor unit 800 or image correction device 120, it is possible to again correct defects in the objects identified based on the detection information in the stored uncorrected image or to return the corrected image data to the original image data based on the correction information and apply the suitable image correction technique or the like.

Also, since the detection information and correction information stored being associated with the image data have smaller data volumes than the image data before the image corrections, they do not require much storage space.

Now, a second embodiment of the present invention will be described. The image correction device according to the second embodiment has similar composition as the first embodiment 120 shown in Fig.6, but it is different from the first embodiment in the way of embedding information in an image in the information providing section. The second embodiment is explained using Fig.6 for showing the second embodiment, focusing on the difference from the first embodiment.

As explained in the above, in the first embodiment the detection information and the correction information are embedded as tag information in the image data in the information providing section 616, whereas in the second embodiment, the detection information and the correction information is embedded as an electronic watermark in the image data in the information providing section 616.

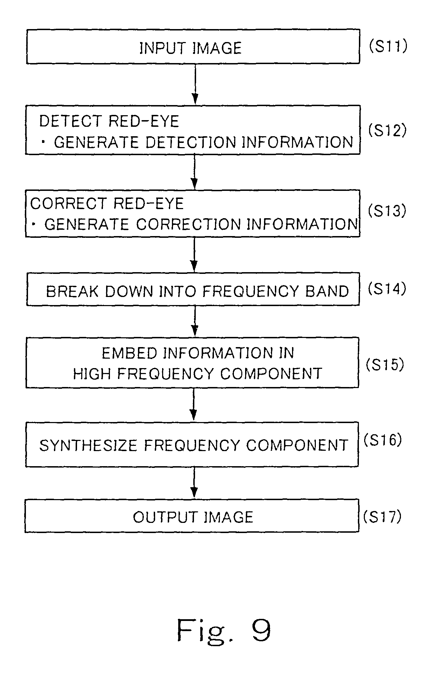

Fig.9 is a flow chart illustrating a second embodiment of processes performed by the image correction device of the present invention.

At first, the image data read by the scanner is captured by the image input section 611 as in a case of the first embodiment (Step S 11 in Fig.9). Then, the image input section 611 sends the captured data to the automatic detection section 614 and the information providing section 616.

As in the case of S2_1 in Fig.7, in the automatic detection section 614, the red eyes with the person's pupils looking red is detected and detection information showing the content of detected red eyes is generated (Step S12).

Further, similarly as Step S12, in the automatic correction section 615, image corrections are made to the red eyes detected in Step S12 to generate the image after image correction. At the same time, generated is the correction information on contents of correction made to red eyes (Step S13). The detection information, the correction information, and the corrected image are sent to the information providing section 616.

In the information providing section 616, orthogonal wavelet transform is performed in the image data received from the image input section 611 and in the image data with corrected red eyes that is received from the automatic correction section 615. As a result, the image data is broken down according to a predetermined frequency band (Step S14). Hereafter, each of disintegrated data according to the frequency band by means of orthogonal wavelet transform is referred as a subband image. Regarding the orthogonal wavelet transform and orthogonal reverse wavelet transform which is described later in the specification, the technique has been widely used in the field of electronic watermarking, as is described in detail in the books, such as "The basics of electronic watermarking - new protect technology by multi media (denshi sukashi no kiso - maruchi media no new purotekuto gijutu)" written by Kineo Matsui, published by Morikita Shuppann Co. Thus detailed explanation is omitted here.

After the image data is broken down into various frequency bands, in the information providing section 616 the detection information and the correction information are embedded in the subband image with a high frequency band (Step S 15). Since human eyes can hardly perceive the highfrequency component, the detection information and the correction information are set to be embedded in high frequency band.

Then, in the information providing section 616, orthogonal reverse wavelet transform is performed to synthesize a subband image, and a electronic-watermarked image data indicating the image that is embedded with information is generated (Step S16). The generated image data embedded with an electronic watermark is output and stored in the image storing section 617 (Step S17).

As described earlier, embedding the detection information and the correction information in the image data as an electronic watermark allows the image data to look natural even after the detection information and the correction information are stored in the image data.

Although orthogonal wavelet transform was used here to explain the case of transforming image data according to frequency band, discrete cosine transform may also be used to perform electronic watermarking.

Now, a third embodiment of the present invention will be described. The image correction device according to the third embodiment also has a similar configuration as the image correction device 120 according to the first embodiment in Fig.6, but it is different from the first embodiment and the second embodiment in the way of embedding information in an image in the information providing section. The third embodiment is similarly explained using Fig.6 for showing the third embodiment, focusing on the difference from the first embodiment and the second embodiment.

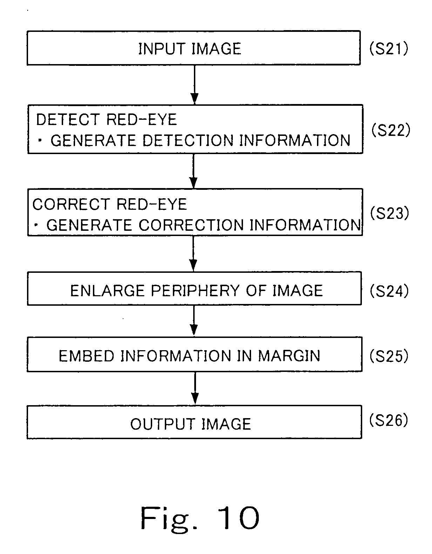

Fig.10 is a flow chart illustrating the second embodiment of processes performed by the image correction device of the present invention.

As described earlier, image data is scanned and input in the image input section 611 in Fig.611 (Step S21).

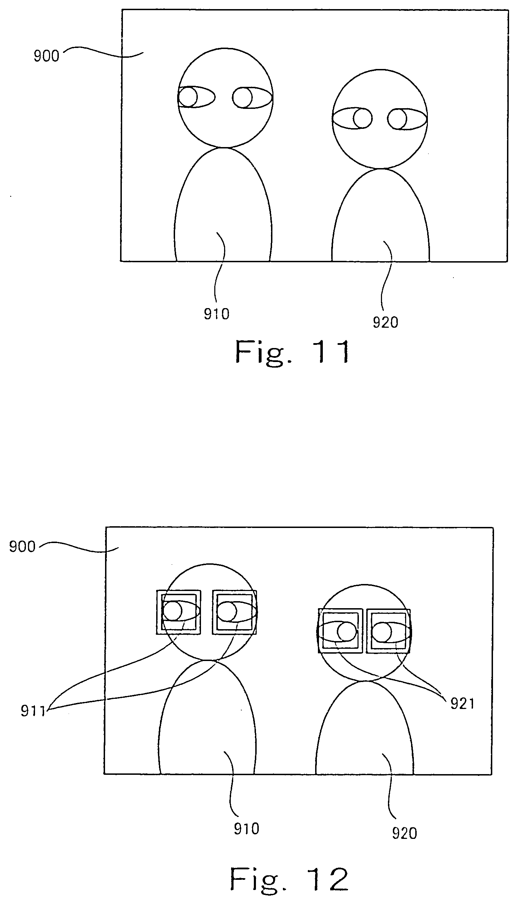

Fig.11 is an example showing an input image data in the image input section. Here, indicated is a photographed image 900 of two persons, namely 910 and 920. The image input section 611 sends the image data representing the photographed image 900 to the automatic detection 614 and the information providing section 616. In the automatic detection section 614, red eyes in an image represented by the image data are detected.

Fig. 12 indicates red-eye portions in the photographed image in fig.11.

The photographed image 900 has defects in red-eye portions 911 of the person 910 and the red-eye portions 912 of the person 920. The automatic detection section 614 generates detection information including positions of red-eye portions 911 and 912, which is sent to the automatic correction section 615 and the information providing section 616.

The automatic correction section 615 corrects the red eyes of red-eye portions 911 and 912 respectively and generates correction information representing the content of correction made to red eyes (Step S23). The corrected image and the correction information are sent to the information providing section 616.

The information providing section 616 enlarges the periphery of the input image sent from the image input section 611 and the corrected image sent from the automatic correction section 615 to generate a margin (Step S 24).

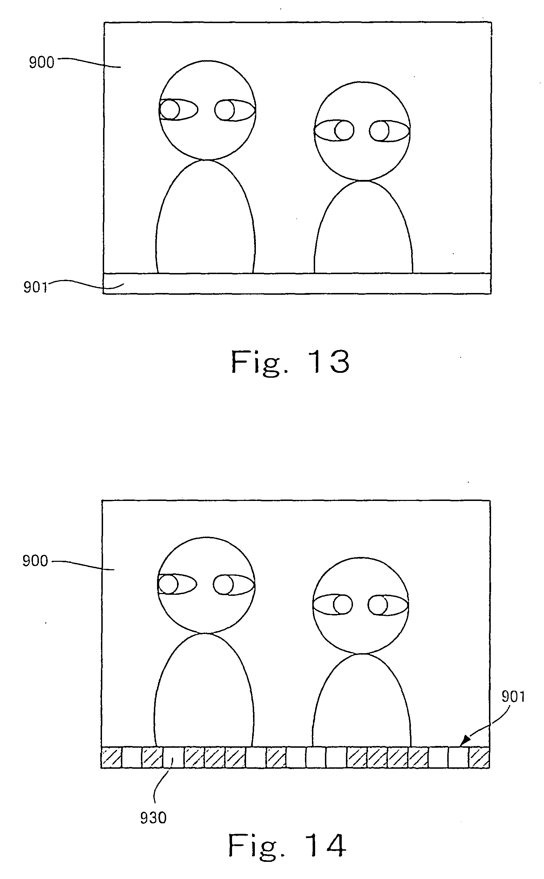

Fig.13 indicates an example of an image with a margin.

Here, the photographed image 900 in Fig.11 is enlarged to have a margin 901.

Further, the information providing section 616 embeds in the generated margin 901 with the detection information and the correction information respectively sent from the automatic detection section 614 and the automatic correction section 615 (Step S25).

Fig.14 shows an example of an image in which information is embedded.

Information 930 including the detection information and the correction information is added to the margin 901 that is also shown in Fig.13

The image data in which information is embedded will be output and stored in the image storing section 617 (Step S 26) as in the case of Step S 17.

Thus, information is embedded in a margin that is generated by enlarging an image and the whole image including the margin is handled as a single image. Consequently the third embodiment has an advantage in that unintended deletion of information such as detection information and correction information can be prevented irrespective of type of an application used for editing an image. In addition, if a data size of an image before adding a margin is set for printing, the image without the margin can be printed. Therefore, a printed image looks quite natural.

Incidentally, according to the first through the third embodiments, the image correction device corrects defects in facial parts composing a face in the image data of an acquired image, but the image correction according to the present invention may also be applied to defects such as flaws, red-eye, closed eyes, or underexposure caused by backlight, in local objects such as human figures, facial parts, and specific subjects in the image.

## Claims

1. An image correction device which makes image corrections to image data of an image to correct defects in local objects in the image, the image correction device comprising:
an image acquisition section which acquires image data of an image;
a detection section which detects objects to be subjected to the image corrections in the image corresponding to the image data acquired by the image acquisition section and generates detection information which describes details of the detected objects; and
a storage section which stores the image data acquired by the image acquisition section and the detection information generated by the detection section by associating the acquired image data with the detection information.

2. The image correction device according to claim 1, wherein the storage section associates the image data and the detection information with each other by associating the objects detected by the detection section in the image corresponding to the image data with the detection information about the objects.

3. The image correction device according to claim 1, wherein the storage section stores the image data and the detection information by embedding the detection information in the image data as an electronic watermark.

4. An image correction device which makes image corrections to image data of an image to correct defects in local objects in the image, the image correction device comprising:
an image acquisition section which acquires image data of an image;
an image correction processor section which makes the image corrections to the objects in the image corresponding to the image data acquired by the image acquisition section and generates correction information which describes details of the image corrections made to the objects, at least to the extent that the objects before the corrections can be reproduced; and
a storage section which stores at least either the image data acquired by the image acquisition section or the image data subjected to the image corrections by the image correction processor section and the correction information generated by the image correction processor section by associating the acquired image data or the corrected image data with the correction information.

5. An image correction program storage medium storing an image correction program that runs on a computer and makes the computer operate as an image correction device which makes image corrections to image data of an image to correct defects in local objects in the image, the image correction program comprising:
an image acquisition section which acquires image data of an image;
a detection section which detects objects to be subjected to the image corrections in the image corresponding to the image data acquired by the image acquisition section and generates detection information which describes details of the detected objects; and
a storage section which stores the image data acquired by the image acquisition section and the detection information generated by the detection section by associating the acquired image data with the detection information.

6. An image correction program storage medium storing an image correction program that runs on a computer and makes the computer operate as an image correction device which makes image corrections to image data of an image to correct defects in local objects in the image, the image correction program comprising:
an image acquisition section which acquires image data of an image;
an image correction processor section which makes the image corrections to the objects in the image corresponding to the image data acquired by the image acquisition section and generates correction information which describes details of the image corrections made to the objects, at least to the extent that the objects before the corrections can be reproduced; and
a storage section which stores at least either the image data acquired by the image acquisition section or the image data subjected to the image corrections by the image correction processor section and the detection information generated by the detection section by associating the acquired image data or the corrected image data with the correction information.
